# NEUE EUROPÄISCHE PATENTSCHRIFT

(11) **EP 1 856 792 B2**
(45) Veröffentlichungstag und Bekanntmachung des Hinweises auf die Entscheidung über den Einspruch: **22.12.2021**
(45) Hinweis auf die Patenterteilung: 02.05.2012
(21) Anmeldenummer: 06700603.1
(22) Anmeldetag: 03.01.2006
(51) Int. Cl.: H02P 6/18

(54) **ROTORLAGENDETEKTION**
METHOD FOR DETECTING THE POSITION OF A ROTOR
DÉTECTION DE LA POSITION D'UN ROTOR

(30) Priorität: 22.02.2005 DE 102005007995
(43) Veröffentlichungstag der Anmeldung: 21.11.2007
(73) Patentinhaber: Robert Bosch GmbH, 70442 Stuttgart (DE)
(72) Erfinder: BOSCH, Volker, 70567 Stuttgart (DE)
(86) Internationale Anmeldenummer: PCT/EP2006/050017
(87) Internationale Veröffentlichungsnummer: WO 2006/089812

(56) Entgegenhaltungen:
- EP-A- 0 251 785
- EP-A- 0 420 501
- EP-A- 0 462 729
- EP-A- 1 083 649
- EP-A- 1 471 629
- WO-A-01/45247
- WO-A1-90/12278
- AT-B- 408 591
- US-A- 4 641 066
- US-A- 4 876 491
- US-A- 4 912 378
- US-A- 4 955 169
- US-A- 5 051 680
- US-A- 5 159 246
- US-A- 5 202 612
- US-A- 5 841 252
- US-A- 5 903 128
- US-A- 6 005 364
- US-A1- 2001 030 517
- US-A1- 2004 085 064
- US-A1- 2007 229 004
- US-B1- 6 172 498
- US-B2- 6 737 836
- US-B2- 7 535 188

## Beschreibung

Die Erfindung betrifft ein Verfahren zur Bestimmung der Lage eines Rotors einer elektrischen Maschine mit mehreren Statorsträngen gemäß dem Oberbegriff des Anspruchs 1.

### Stand der Technik

Die AT 408 591 B beschreibt ein Verfahren zur Bestimmung der Rotorlage mit den Merkmalen des Oberbegriffs des Anspruchs 1.

Es sind zahlreiche Verfahren zur Bestimmung der Lage eines Rotors (Läufers) einer elektrischen Maschine bekannt. Ein großes Interesse richtet sich auf die sensorlose Rotorlagendetektion bei elektronisch kommutierten Motoren, den so genannten EC-Motoren beziehungsweise bürstenlosen DC-Motoren. Hier ist es gerade für die in großer Stückzahl hergestellten kleinen EC-Motoren entscheidend, preisgünstige und dennoch leistungsfähige Verfahren zur Verfügung zu haben, um auch bei einer kostengünstigen Herstellung noch eine ausreichende Genauigkeit bei der Rotorlagendetektion zu erzielen. Kennt man die absolute Rotorlage hinreichend genau, so lassen sich die Statorstränge (Ständerstränge) derart bestromen, dass der Motor mit maximalem Drehmoment anläuft. Zudem kann dann sichergestellt werden, dass der Motor in die gewünschte Drehrichtung anläuft. Gemäß dem Stand der Technik arbeiten einfach und kostengünstig zu realisierende Verfahren allerdings in der Regel erst dann zuverlässig, wenn der Rotor bereits rotiert, da diese Verfahren auf der Auswertung einer rotatorisch induzierten Spannung beruhen. (Für eine Übersicht der geläufigen Verfahren sei auf die Veröffentlichung "Xie, J.: Entwicklung eines Scherwellengenerators für den Einsatz in tiefen Bohrlöchern, VDI-Verlag, Düsseldorf, 1993" verwiesen.) Zwar sind auch Verfahren bekannt, die die absolute Position des Rotors im Stillstand detektieren können, doch ist die Implementierung dieser Verfahren in der Regel mit einem hohen Schaltungsaufwand verbunden und verursacht hohe Herstellungskosten.

### Vorteile der Erfindung

Für ein Verfahren zur Bestimmung der Lage eines Rotors einer elektrischen Maschine mit mehreren Statorsträngen, insbesondere eines EC-Motors, wobei dem Rotor mehrere magnetische Achsen zugeordnet sind, ist erfindungsgemäß vorgesehen, dass die Statorstränge wechselnd mit einer Spannung beaufschlagt werden, die resultierenden Ströme gemessen werden und durch Auswertung der gemessenen Ströme eine Zuordnung mindestens eines Statorstrangs zu mindestens einer magnetischen Achse ermittelt wird. Zudem werden die Statorstränge mit einer Spannung beaufschlagt und wird mittels einer Strommessung mindestens ein Sättigungseffekt eines Stroms durch einen Statorstrang ermittelt zur Bestimmung der magnetischen Orientierung des Rotors. Dieses Vorgehen beruht auf der Erkenntnis, dass der aus einer Spannungsstimulation resultierende Strom abhängig ist von der magnetischen Verkettung zwischen einer magnetischen Achse des Rotors und eines Statorstrangs. Werden also die Statorstränge wechselnd mit einer Spannung beaufschlagt, so stellen sich dabei für jeden Statorstrang unterschiedliche Ströme ein, je nachdem wie der jeweilige Statorstrang zum Rotor beziehungsweise zu dessen magnetischen Achsen orientiert ist.

Vorteilhafterweise werden die Statorstränge mit wechselnder Polarität angesteuert. Damit kann das Auftreten eines resultierenden Drehmoments verringert beziehungsweise verhindert werden, und ein Andrehen des Motors, insbesondere mit einem nicht mehr vernachlässigbaren Drehmoment, unterbleibt.

Bevorzugt werden die Statorstränge mit mehrfach wechselnder Polarität angesteuert. Dadurch stellt sich ein quasi-stationärer Zustand ein, wenngleich zeitlich sehr kurz, in dem die Strommessung mit einfachen Mitteln durchgeführt werden kann. Dies ermöglicht eine kostengünstige Umsetzung des Verfahrens. Natürlich ist es grundsätzlich auch möglich, mit schnellen Messgeräten den Stromfluss ohne diesen mehrfachen Wechsel durchzuführen.

Gemäß der Erfindung umfasst die Auswertung die Bestimmung des größten gemessenen Stroms. Dies ermöglicht einen einfachen Rückschluss auf die größte magnetische Verkettung.

Gemäß einer Weiterbildung der Erfindung wird die Zuordnung eines Statorstrangs zur magnetischen d-Achse des Rotors ermittelt. Die größte magnetische Verkettung mit der d-Achse weist der Statorstrang auf, bei dessen Stimulation der größte Strom fließt. Damit ergibt sich eine einfache Möglichkeit der Zuordnung.

Mit Vorteil erfolgt die Spannungsbeaufschlagung pulsweitenmoduliert. Auf diese Weise lässt sich, bei einer als konstant angenommenen Versorgungsspannung, die effektiv auf den Statorstrang wirksame Spannung reduzieren

Vorteilhafterweise wird die Strommessung mittels mindestens eines, insbesondere in einem Gesamtstromzweig angeordneten, Shuntwiderstands durchgeführt.

Ist die Zuordnung zwischen einem Statorstrang und einer magnetischen Achse des Rotors ermittelt worden, dabei insbesondere der Statorstrang, der der d-Achse zugeordnet ist, so wird dieser Statorstrang nun wieder mit einer Spannung beaufschlagt. Dabei wird die Ansteuerung derart gewählt, dass sich ein Sättigungseffekt des Statorstrangs einstellen kann, der sich wiederum in einem Rückgang der Induktivität und einem schnelleren Stromanstieg zeigt. Dies ist dann der Fall, wenn sich die Ersatzdurchflutung der Rotormagnete und die Durchflutung des bestromten Statorstrangs gleichgerichtet überlagern. Im umgekehrten Fall, wenn sich die Durchflutungen also entgegengesetzt überlagern, ist der Stromfluss kleiner, so dass eine Unterscheidung zwischen der gleich gerichteten und der entgegen gerichteten Orientierung des Rotors möglich ist.

Bevorzugt wird die Sättigung mittels einer Messung einer Spannungsdifferenz zwischen einem gemeinsamen Sternpunkt der Statorstränge und einem an den Eingängen der Statorstränge gebildeten Summationspunkt bestimmt. Die Auswertung des Signalverlaufs erlaubt dann den Rückschluss auf die Orientierung des Rotors.

Vorteilhafterweise wird aus der Spannungsdifferenz mittels einer Integration über der Zeit ein integriertes Signal erzeugt.

Mit Vorteil wird das integrierte Signal hinsichtlich seiner Kurvenform ausgewertet. Dabei handelt es sich, eine im Wesentlichen rechteckförmige Stimulation vorausgesetzt, um ein in etwa dreieckförmiges Signal. Die Form dieses Signals lässt die Orientierung des Rotors erkennen.

Bei einer bevorzugten Weiterbildung der Erfindung wird das integrierte Signal hinsichtlich einer Abflachung und/oder einer Überhöhung untersucht. Aufgrund der Sättigungseffekte unterscheidet sich das integrierte Signal von einer idealisierten Form. Bei dem zuvor genannten in etwa dreieckförmigen Signal bedeutet dies, dass eine der beiden Spitzen abgeflacht ist, während die andere Spitze überhöht ist. Je nachdem, ob diese Abflachung beziehungsweise Überhöhung an der unteren oder an der oberen Spitze des Dreiecksignals auftaucht, liegt eine gleich gerichtete beziehungsweise eine entgegen gerichtete Orientierung des Rotors vor.

### Zeichnungen

Die Erfindung wird nun anhand von Ausführungsbeispielen näher erläutert. Es zeigen
- Figur 1: ein Ausführungsbeispiel einer Vorrichtung zur Bestimmung der Lage eines Rotors einer elektrischen Maschine, und
- Figur 2: ein Ausführungsbeispiel eines vierpoligen Rotors mit seinen magnetischen Achsen.

### Beschreibung der Ausführungsbeispiele

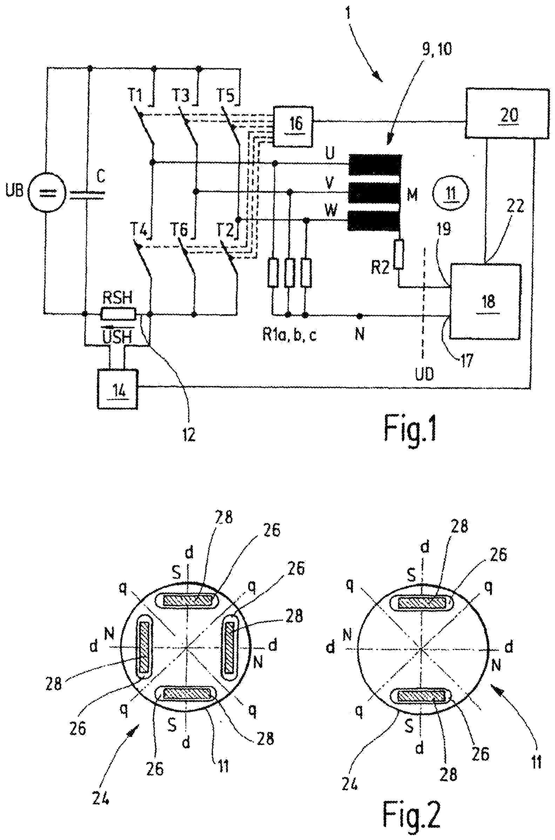

Figur 1 zeigt eine vorteilhafte Ausgestaltung einer Vorrichtung 1 anhand derer das erfindungsgemäße Verfahren nun beispielhaft ausgeführt wird. Es sind zunächst eine elektrische Maschine 9, hier ein EC-Motor 10, mit Statorsträngen U, V, W, einem Sternpunkt M und einem Rotor 11 symbolisch dargestellt, und Transistoren T1 bis T6 zur Realisierung einer Brückschaltung gezeigt. Der EC-Motor 10 kann über eine Gleichspannungsquelle UB mit parallel geschaltetem Kondensator C versorgt werden. Im Summenstromzweig 12 ist ein Shuntwiderstand RSH angeordnet, über den die Spannung USH abfällt. Die Spannung USH wird von der Strommessvorrichtung 14 in einen Stromwert übersetzt. Die Transistoren T1 bis T6 werden von einer Ansteuerungseinrichtung 16 angesteuert, wie es mit den von der Ansteuerungseinrichtung 16 ausgehenden gestrichelten Linien symbolisiert ist. An den Eingängen der Statorstränge U, V, W ist über Widerstände R1a, R1b, R1c ein Summationspunkt N gebildet, dessen Potential an einen ersten Eingang 17 eines Integrators 18 geführt ist. An einen zweiten Eingang 19 des Integrators 18 ist über einen Widerstand R2 das Potential des Sternpunkts M geführt. Anhand der gestrichelten Linie wird angedeutet, dass effektiv eine Spannungsdifferenz UD in den Integrator 18 eingespeist wird. Der Ausgang 22 des Integrators 18 ist mit einer Auswerteeinrichtung 20 verbunden, an die auch die Strommessvorrichtung 14 und die Ansteuerungseinrichtung 16 angeschlossen sind.

Um nun die Rotorlage zu ermitteln, werden bei dieser Ausführungsform zwei Schritte durchgeführt: In einem ersten Schritt wird ermittelt, welcher Statorstrang U, V, W mit der magnetischen d-Achse des Rotors 11 korrespondiert. In einem zweiten Schritt wird dann bestimmt, welche Orientierung der Rotor 11 zum gerade ermittelten Statorstrang U, V, W hat. Diese beiden Schritte werden nun erläutert.

Um festzustellen, welcher Statorstrang U, V, W mit der magnetischen d-Achse des Rotors 11 magnetisch verkoppelt ist, wird zunächst der Statorstrang U positiv bestromt. Dazu werden die Transistoren T1, T2, T6 geschlossen. Nach der Hälfte einer vorgegebenen Zykluszeit wird der Statorstrang U negativ bestromt, das heißt, die Transistoren T1, T2, T6 werden geöffnet und die Transistoren T3, T4, T5 werden geschlossen. Nun kann mittels der Strommessvorrichtung 14 der resultierende Strom gemessen werden oder alternativ der beschriebene Zyklus einige Male wiederholt werden, um eine Strommessung in einem quasi-stationären Zustand durchzuführen. Die Zykluszeit darf dabei nicht zu kurz gewählt werden, da sonst Wirbelströme im Eisen die Messung verfälschen, und auch nicht zu lang gewählt werden, da sonst der Strom mit jeder Halbwelle weiter ansteigt. Alternativ zu diesem Zyklus kann auch eine pulsweitenmodulierte Ansteuerung erfolgen. Dazu wird während der ersten Hälfte des Zyklus für einen ersten Zeitabschnitt, zum Beispiel 60% der Dauer einer Zyklushälfte, der Statorstrang U positiv bestromt, dann für die verbleibende Dauer der Zyklushälfte (zweiter Zeitabschnitt), im Beispiel wären dies 40%, negativ bestromt. Während der zweiten Zyklushälfte wird der Statorstrang U jetzt für die Dauer des zweiten Zeitabschnitts positiv bestromt, also 40% der Dauer einer Zyklushälfte, und dann negativ für die verbleibende Zeit der Zyklushälfte, hier im Beispiel 60% der Dauer einer Zyklushälfte. Es wird dadurch die effektiv am Statorstrang U anliegende Spannung reduziert.

Unabhängig von der gewählten Art der Stimulation werden die Strommessungen auch für die verbleibenden Statorstränge V, W durchgeführt. Mit diesen Werten kann dann bestimmt werden, mit welchem der drei Statorstränge U, V, W die d-Achse des Rotors 11 magnetisch verkettet ist: Die größte magnetische Verkettung mit der d-Achse weist der Statorstrang U, V, W auf, bei dessen Stimulation der größte Strom fließt. Es sei für die folgenden Ausführungen angenommen, dass der Statorstrang U als mit der d-Achse verkettet ermittelt wurde.

Es schließt sich nun der zweite Schritt an, in dem geprüft wird, ob der Rotor 11 in Nord-Süd- oder in Süd-Nord-Orientierung mit dem Statorstrang U verknüpft ist. Dazu wird der zuvor ermittelte Statorstrang U erneut mit dem beschriebenen Stimulationssignal beaufschlagt. Da, wie im allgemeinen Teil der Beschreibung erläutert, ein Sättigungseffekt erzielt werden soll, wird der Strom in der Regel größer gewählt, als im ersten Schritt. Wurde die pulsweitenmodulierte Ansteuerung gewählt, so kann die Stromerhöhung beziehungsweise die zugrunde liegende Spannungserhöhung über eine Änderung des Tastverhältnisses eingestellt werden: So kann beispielsweise in der ersten Zyklushälfte nun ein Tastverhältnis von 80% zu 20% und in der zweiten Zyklushälfte ein Tastverhältnis von 20% zu 80% eingestellt werden. (Bei Bedarf kann natürlich auch auf die einfache Ansteuerung, erste Zyklushälfte positive Bestromung und zweite Zyklushälfte negative Bestromung, gewählt werden.) Wie bereits erwähnt, ergibt sich eine Spannungsdifferenz UD zwischen dem Summationspunkt N und dem über den Widerstand R2 zugeführten Potential des Sternpunkts M. Da das Signal der Spannungsdifferenz UD, insbesondere bei Verwendung der pulsweitenmodulierten Ansteuerung, Störungen enthalten kann, ist es vorteilhaft, das Signal der Spannungsdifferenz UD zu glätten. In diesem Fall wurde ein als Integrator 18 beschalteter Operationsverstärker verwendet, aber es sind selbstverständlich viele Alternativen denkbar, darunter insbesondere ein RC-Tiefpass. Liegt am Statorstrang U das bereits erwähnte Stimulationssignal an, so kann am Ausgang 22 des Integrators 18 ein in etwa dreieckförmiges Signal beobachtet werden. Da im gegebenen Fall die d-Achse des Rotors 11 der Achse des angeregten Statorstrangs U entspricht, sind ab einem bestimmten Wert des Ständerstroms Sättigungseffekte der Eisenwege des EC-Motors 10 erkennbar. (Um diesen Sättigungseffekt zu erzielen, muss der Strom, wie erwähnt, ausreichend groß sein.) Bei bestimmten Ausgestaltungen der Vorrichtung 1 und des EC-Motors 10, führt dies beispielsweise dazu, dass das Integratorsignal unsymmetrisch wird und sich eine der beiden Spitzen des in etwa dreieckförmigen Signals abflacht. Bei anderen Ausgestaltungen kann sich der Effekt anders zeigen, es ist aber stets die Identifizierung der Orientierung des Rotors 11 möglich. Die kann beispielsweise über eine Analog-DigitalWandlung und Auswertung in der Auswerteeinrichtung 20 erfolgen. Dadurch ist insgesamt die Rotorlage hinreichend genau bekannt, so dass ein zielgenaues Andrehen des EC-Motors 10 möglich ist.

Figur 2 zeigt beispielhaft in einer linken Abbildung einen vierpoligen Rotor 11 mit einem mechanisch symmetrischen Aufbau. Der Rotor 11 weist ein Blechpaket 24 mit vier Aussparungen 26 auf. In jede dieser Aussparungen 26 sind Magnetplättchen 28 eingebracht. Die magnetischen Achsen d, q des Rotors 11 sind mit d (d-Achse) und q (q-Achse) beschriftet. In der linken Abbildung der Figur 2 ist ein vierpoliger Rotor 11 mit einem mechanisch unsymmetrischen Aufbau gezeigt. Auch hier sind die magnetischen Achsen d, q des Rotors 11 dargestellt. Dabei weist die d-Achse d einen reduzierten magnetischen Leitwert und die q-Achse q einen erhöhten magnetischen Leitwert auf.

Das erfindungsgemäße Verfahren lässt sich besonders kostengünstig realisieren. Dies insbesondere auch deshalb, weil es gut mit anderen Verfahren kombinierbar ist. Dabei handelt es sich beispielsweise um Verfahren, die in "Reutlinger, Kurt: Mechatroniksystem für Einzelspindelantriebe in Textilmaschinen, Shaker-Verlag, Aachen, 1997" und in "Bosch, Volker: Elektronisch kommutiertes Einzelspindelantriebssystem, Shaker-Verlag, Aachen, 2001" beschrieben sind.

## Patentansprüche

1. Verfahren zur Bestimmung der Lage eines Rotors (11) einer elektrischen Maschine (9) mit mehreren Statorsträngen (U, V, W), insbesondere eines EC-Motors (10), wobei der Rotor (11) mehrere magnetische Achsen (d, q) mit unterschiedlichen magnetischen Leitwerten aufweist, wobei das Verfahren bei Stillstand der elektrischen Maschine in zwei Schritten durchgeführt wird, wobei in einem ersten Schritt die Statorstränge (U, V, W) wechselnd mit einer Spannung beaufschlagt werden, wobei die resultierenden Ströme gemessen werden und durch Auswertung der gemessenen Ströme eine Zuordnung mindestens eines Statorstrangs (U, V, W) zu mindestens einer magnetischen Achse (d, q) ermittelt wird und in einem zweiten Schritt die magnetische Orientierung des Rotors (11) relativ zu dem in dem ersten Schritt ermittelten Statorstrang (U, V, W) bestimmt wird, wozu die Statorstränge (U, V, W) mit einer Spannung beaufschlagt werden und mittels einer Strommessung mindestens ein Sättigungseffekt eines Stroms durch einen Statorstrang (U, V, W) ermittelt wird, **dadurch gekennzeichnet, dass** die Auswertung die Bestimmung des größten gemessenen Stroms umfasst.

2. Verfahren nach Anspruch 1, **dadurch gekennzeichnet, dass** die Statorstränge (U, V, W) jeweils mit wechselnder Polarität angesteuert werden.

3. Verfahren nach Anspruch 1, **dadurch gekennzeichnet, dass** die Statorstränge (U, V, W) mit mehrfach wechselnder Polarität angesteuert werden.

4. Verfahren nach einem der vorhergehenden Ansprüche, **dadurch gekennzeichnet, dass** die Zuordnung eines Statorstrangs (U, V, W) zur magnetischen d-Achse (d) des Rotors (11) ermittelt wird.

5. Verfahren nach Anspruch 4, **dadurch gekennzeichnet, dass** in dem ersten Schritt des Verfahrens der Statorstrang (U, V, W) mit dem größten gemessenen Strom der magnetischen d-Achse (d) des Rotors (11) zugeordnet wird.

6. Verfahren nach einem der vorhergehenden Ansprüche, **dadurch gekennzeichnet, dass** die Spannungsbeaufschlagung pulsweitenmoduliert erfolgt.

7. Verfahren nach einem der vorhergehenden Ansprüche, **dadurch gekennzeichnet, dass** die Strommessung mittels mindestens eines, insbesondere in einem Summenstromzweig (12) angeordneten, Shuntwiderstands (RSH) durchgeführt wird.

8. Verfahren nach Anspruch 1, **dadurch gekennzeichnet, dass** die Sättigung mittels einer Messung einer Spannungsdifferenz (UD) zwischen einem gemeinsamen Sternpunkt (M) der Statorstränge (U, V, W) und einem an den Eingängen der Statorstränge (U, V, W) gebildeten Summationspunkt (N) bestimmt wird.

9. Verfahren nach Anspruch 8, **dadurch gekennzeichnet, dass** aus der Spannungsdifferenz (UD) mittels einer Integration über der Zeit ein integriertes Signal erzeugt wird.

10. Verfahren nach Anspruch 9, **dadurch gekennzeichnet, dass** das integrierte Signal hinsichtlich seiner Kurvenform ausgewertet wird.

11. Verfahren einem der Ansprüche 9 oder 10, **dadurch gekennzeichnet, dass** das integrierte Signal hinsichtlich einer Abflachung und/oder einer Überhöhung untersucht wird.

## Claims

1. Method for determining the position of a rotor (11) of an electrical machine (9) having a plurality of stator phases (U, V, W), in particular of an electronically commutated motor (10), with the rotor (11) having a plurality of magnetic axes (d, q) with different magnetic permeances, wherein the method being carried out in two steps when the electrical machine is stationary, with the stator phases (U, V, W) being supplied with a voltage in an alternating manner in a first step and the resulting currents being measured, wherein an association between at least one stator phase (U, V, W) and at least one magnetic axis (d, q) is ascertained by evaluating the measured currents, and the magnetic orientation of the rotor (11) relative to the stator phase (U, V, W) ascertained in the first step is determined in a second step, for which purpose the stator phases (U, V, W) are supplied with a voltage and a saturation effect of a current through a stator phase (U, V, W) is ascertained by means of a current measurement, **characterized in that** the evaluation comprising determining the largest measured current.

2. Method according to Claim 1, **characterized in that** each of the stator phases (U, V, W) are actuated with alternating polarity.

3. Method according to Claim 1, **characterized in that** the stator phases (U, V, W) are actuated with multiply alternating polarity.

4. Method according to one of the preceding claims, **characterized in that** the association between a stator phase (U, V, W) and the magnetic d-axis (d) of the rotor (11) is ascertained.

5. Method according to Claim 4, **characterized in that** the stator phase (U, V, W) with the largest measured current is associated with the magnetic d-axis (d) of the rotor (11) in the first step of the method.

6. Method according to one of the preceding claims, **characterized in that** voltage is supplied in a pulse-width-modulated manner.

7. Method according to one of the preceding claims, **characterized in that** the current is measured by means of at least one shunt resistor (RSH), which is arranged in a summation current branch (12) in particular.

8. Method according to Claim 1, **characterized in that** the saturation is determined by means of measuring a voltage difference (UD) between a common star point (M) of the stator phases (U, V, W) and a summation point (N) which is formed at the inputs to the stator phases (U, V, W).

9. Method according to Claim 8, **characterized in that** an integrated signal is generated from the voltage difference (UD) by means of integration with respect to time.

10. Method according to Claim 9, **characterized in that** the integrated signal is evaluated in respect of the shape of its curve.

11. Method according to either of Claims 9 and 10, **characterized in that** the integrated signal is examined in respect of a flattened portion and/or a peak.

## Revendications

1. Procédé de détermination de la position du rotor (11) d'une machine électrique (9), en particulier d'un moteur EC (10), qui présente plusieurs barres de stator (U, V, W), le rotor (11) présentant plusieurs axes magnétiques (d, q) dont les valeurs de conduction magnétique sont différentes, le procédé étant exécuté en deux étapes pendant que la machine électrique est à l'arrêt, une tension étant appliquée en alternance dans une première étape sur les barres de stator (U, V, W) et les courants résultants étant mesurés, et une association entre au moins une barre de stator (U, V, W) et au moins un axe magnétique (d, q) est déterminée par évaluation des courants mesurés et en ce que dans une deuxième étape, l'orientation magnétique du rotor (11) par rapport à la barre de stator (U, V, W) déterminée dans la première étape est définie et dans ce but, une tension est appliquée sur les barres de stator (U, V, W) et au moyen d'une mesure du courant, au moins un effet de saturation d'un courant passant dans une barre de stator (U, V, W) est déterminé, **caractérisé en ce que** l'évaluation comporte la détermination du plus grand courant mesuré.

2. Procédé selon la revendication 1, **caractérisé en ce que** les barres de stator (U, V, W) sont chacune commandées à des polarités alternées.

3. Procédé selon la revendication 1, **caractérisé en ce que** les barres de stator (U, V, W) sont commandées à des polarités alternant plusieurs fois.

4. Procédé selon l'une des revendications précédentes, **caractérisé en ce que** l'association d'une barre de stator (U, V, W) à l'axe magnétique d (d) du rotor (11) est déterminée.

5. Procédé selon la revendication 4, **caractérisé en ce que** dans la première étape du procédé, la barre de stator (U, V, W) qui présente le plus grand courant mesuré est associée à l'axe magnétique d (d) du rotor (11).

6. Procédé selon l'une des revendications précédentes, **caractérisé en ce que** l'application de la tension s'effectue en impulsions modulées en largeur.

7. Procédé selon l'une des revendications précédentes, **caractérisé en ce que** la mesure du courant est réalisée au moyen d'au moins une résistance de shunt (RSH) disposée en particulier dans une branche (12) de courant de somme.

8. Procédé selon la revendication 1, **caractérisé en ce que** la saturation est déterminée au moyen d'une mesure de la différence de tension (UD) entre un point d'étoile commun (M) des barres de stator (U, V, W) et un point de somme (N) formé aux entrées des barres de stator (U, V, W).

9. Procédé selon la revendication 8, **caractérisé en ce qu'**un signal intégré est formé à partir de la différence de tension (UD) au moyen d'une intégration par rapport au temps.

10. Procédé selon la revendication 9, **caractérisé en ce que** la forme de la courbe du signal intégré est évaluée.

11. Procédé selon l'une des revendications 9 ou 10, **caractérisé en ce qu'**un aplatissement et/ou une hauteur excessive sont recherchés dans le signal intégré.
